# EUROPEAN PATENT APPLICATION

(11) **EP 2 744 066 A1**
(43) Date of publication of application: **18.06.2014**
(21) Application number: 12822004.3
(22) Date of filing: 07.08.2012
(51) Int. Cl.: H02J 7/02, B60L 11/18, H01M 10/44, H02J 7/00

(54) **ELECTRIC CONSTRUCTION MACHINE**

(30) Priority: 08.08.2011 JP 2011173298
(71) Applicant: Hitachi Construction Machinery Co., Ltd., Bunkyo-ku Tokyo 112-8563 (JP)
(72) Inventor: KURIKUMA Hajime, Ibaraki 300-0013 (JP); TAKISHITA Tatsuo, Ibaraki 300-0013 (JP); YUNOUE Masayuki, Ibaraki 300-0013 (JP)
(74) Representative: Beetz & Partner
(86) International application number: PCT/JP2012/070052
(87) International publication number: WO 2013/021988

(57) **Abstract**

Provided is an electric construction machine capable of increasing the charging rate of its battery device in spite of a short charging time. The electric construction machine comprises a battery device 7 which includes a plurality of battery systems 56A and 56B and an inverter device 32 which has a motor driving control function of selectively connecting one of the battery systems 56A and 56B, converting DC power supplied from the connected battery system into AC power, and supplying the AC power to an electric motor 31. The inverter device 32 has a battery charging control function of selectively connecting one of the battery systems 56A and 56B and supplying electric power from an external commercial power supply 48 to the connected battery system. When the voltages of the battery systems 56A and 56B are less than an upper limit value V₁ at the start of the charging, constant-current charging of the battery system 56A is started. Thereafter, before the battery system 56A reaches the fully charged state, the connection is switched to the battery system 56B and constant-current charging of the battery system 56B is started.

## Description

### Technical Field

The present invention relates to an electric construction machine such as an electric hydraulic excavator, and in particular, to an electric construction machine equipped with a battery device as the electric power source for the electric motor.

### Background Art

An electric hydraulic excavator as a type of the electric construction machine comprises a hydraulic pump which is driven by an electric motor, a plurality of hydraulic actuators (specifically, a boom hydraulic cylinder, an arm hydraulic cylinder, a bucket hydraulic cylinder, etc.), a plurality of directional control valves which respectively control the flow of hydraulic fluid from the hydraulic pump to the hydraulic actuators, and operating means for respectively operating the directional control valves (e.g., a plurality of operating devices each outputting pilot pressure corresponding to the operational position of a control lever), for example.

Among such electric hydraulic excavators, there have been known those equipped with a battery as the electric power source for the electric motor. The battery is made of materials such as lithium ions and includes minimum units called "cells". The commercially available final form of the battery is a "module" including a plurality of cells in one package. An electric hydraulic excavator described in Patent Literature 1 is equipped with a battery device that is made up of a plurality of modules (i.e., a plurality of batteries).

### Prior Art Literature

### Patent Literature

Patent Literature 1: JP,A 2008-44408

### Summary of the Invention

### Problem to be Solved by the Invention

Although not specifically described in the Patent Literature 1, in the illustrated middle-sized electric hydraulic excavator (operating mass ≥ 6 tons), all the batteries are connected in series and the electric motor is driven by electric power supplied from all the batteries since the electric power required by the electric motor is relatively high. In other words, the electric hydraulic excavator has only one battery system and uses all the batteries simultaneously. Such a middle-sized electric hydraulic excavator is generally operated in a place close to a charging spot/facility. In contrast, a small-sized electric hydraulic excavator (operating mass < 6 tons) is often operated in a place distant from a charging spot/facility (e.g., tunneling work). Thus, when the remaining electric amount (battery level) of the battery device is low and the battery charging is necessary, the electric hydraulic excavator is required to travel by itself (with its own power) to a charging spot or to the bed of a transporter (e.g., truck) so as to be transported to a charging facility. If the remaining electric amount of every one of the batteries drops to the empty level while the operator is unaware of the situation, the electric hydraulic excavator stops on the spot and the battery charging becomes difficult since the excavator is incapable of traveling by itself.

In consideration of the above-described situation, the present inventors propose a configuration in which the battery device is made up of a plurality of battery systems, one of the battery systems is selectively connected, and DC power from the connected battery system is converted by an inverter into AC power and supplied to the electric motor (in short, the simultaneous use of all the batteries is avoided) based on the viewpoint that the electric power required by the electric motor is relatively low in a small-sized electric hydraulic excavator, for example. With such a configuration, even if the electric hydraulic excavator stops due to the drop in the remaining electric amount of one battery system in use to the empty level, the electric hydraulic excavator can be activated again by switching the connection to another battery system. Accordingly, the electric hydraulic excavator is enabled to travel by itself and the difficulty in the battery charging is eliminated. Further, the operator is allowed to feel and recognize the operating time of the excavator during which one battery system shifts from a prescribed charged state to the fully discharged state. Accordingly, the estimation of the time between the switching of the battery system and the exhaustion of the battery system becomes easy and that facilitates the planning of the charging timing.

Incidentally, it is generally known that the charging voltage and the charging current are limited in batteries of the lithium ion type and the charging of such batteries should be carried out according to the constant-current/constant-voltage method. The constant-current/constant-voltage method is a method of first charging the battery by constant-current charging while the voltage of the battery is less than an upper limit value and thereafter charging the battery by constant-voltage charging when the voltage has reached the upper limit value (e.g., approximately 4.1 - 4.2 V per cell). For the charging of the aforementioned battery device including a plurality of battery systems, the following procedure can be employed, for example: When the voltages of one battery system (former battery system) and another battery system (latter battery system) are less than the upper limit value, for example, it is possible to charge the former battery system by the constant-current charging, charge the former battery system by the constant-voltage charging when the voltage of the former battery system has reached the upper limit value, switch the connection to the latter battery system when the former battery system has reached the fully charged state, charge the latter battery system by the constant-current charging, and charge the latter battery system by the constant-voltage charging to the fully charged state when the voltage of the latter battery system has reached the upper limit value.

However, the charging time necessary for charging all the battery systems to the fully charged state is considerably long and it is sometimes difficult to secure such a long charging time. In such a situation, there is a request for increasing the charging rate of the battery device in spite of a short charging time (e.g., battery charging during an intermission between operations).

It is therefore the primary object of the present invention to provide an electric construction machine capable of increasing the charging rate of the battery device in spite of a short charging time.

### Means for Solving the Problem

(1) To achieve the above object, the present invention provides an electric construction machine comprising: an electric motor; a hydraulic pump driven by the electric motor; a plurality of hydraulic actuators driven by hydraulic fluid delivered from the hydraulic pump; a battery device including a plurality of battery systems each having a plurality of batteries connected in series; connection switching means for selectively connecting one of the battery systems; and an inverter for converting DC power supplied from the battery system selectively connected by the connection switching means into AC power and supplying the AC power to the electric motor. The electric construction machine comprises charging control means which supplies electric power from an external power supply to the battery system selectively connected by the connection switching means, performs constant-current charging when the voltage of the battery system is less than a preset upper limit value, and performs constant-voltage charging when the voltage of the battery system has reached the upper limit value. When the voltages of one battery system (former battery system) and another battery system (latter battery system) included in the plurality of battery systems are less than the upper limit value, the charging control means makes the connection switching means selectively connect the former battery system, starts the constant-current charging of the former battery system, thereafter makes the connection switching means switch the connection to the latter battery system before the former battery system reaches a fully charged state, and then starts the constant-current charging of the latter battery system.
   As a comparative example, it is possible to first charge the former battery system to the fully charged state and thereafter charge the latter battery system. In contrast to such a comparative example, the present invention is capable of increasing the charging rate in cases where it is impossible to secure a sufficient charging time for charging all the battery systems to the fully charged state (i.e., when the charging time is short). Specifically, the charging current and the charging efficiency (i.e., the amount of charging per unit time) are generally lower in the constant-voltage charging compared to those in the constant-current charging. Further, even during the constant-voltage charging, the charging current decreases and the charging efficiency drops as the charged battery system approaches the fully charged state. Thus, charging the latter battery system (farther from the fully charged state) is more advantageous for increasing the charging efficiency than charging the former battery system (closer to the fully charged state). Therefore, the electric construction machine in accordance with the present invention is capable of increasing the charging rate of the battery device in spite of a short charging time.
(2) Preferably, in the above electric construction machine (1), when the voltages of one battery system and another battery system included in the plurality of battery systems are less than the upper limit value, the charging control means makes the connection switching means selectively connect the former battery system, charges the former battery system by the constant-current charging, makes the connection switching means switch the connection to the latter battery system immediately after the voltage of the former battery system reaches the upper limit value, and then starts the constant-current charging of the latter battery system.
(3) Preferably, in the above electric construction machine (2), when the voltages of one battery system and another battery system included in the plurality of battery systems are less than the upper limit value, the charging control means makes the connection switching means selectively connect the former battery system, charges the former battery system by the constant-current charging, makes the connection switching means switch the connection to the latter battery system immediately after the voltage of the former battery system reaches the upper limit value, charges the latter battery system by the constant-current charging, and charges the latter battery system by the constant-voltage charging when the voltage of the latter battery system has reached the upper limit value.
   As a comparative example, it is possible to charge the former battery system by the constant-current charging, switch the connection to the latter battery system immediately after the voltage of the former battery system reaches the upper limit value, charge the latter battery system by the constant-current charging, switch the connection to the former battery system immediately after the voltage of the latter battery system reaches the upper limit value, and then charge the former battery system by the constant-voltage charging. Compared to such a comparative example, the present invention is capable of reducing the number of times of switching the connection of the battery systems and increasing the operating life of the components for the switching of the connection.
(4) Preferably, in any one of the above electric construction machines (1) - (3), the charging control means makes the connection switching means selectively connect one of the former and latter battery systems, charges the connected battery system by the constant-voltage charging, thereafter makes the connection switching means switch the connection to the other one of the former and latter battery systems before the connected battery system reaches the fully charged state, and charges the other one of the former and latter battery systems by the constant-voltage charging.

### Effect of the Invention

According to the present invention, the charging rate of the battery device can be increased in spite of a short charging time.

### Brief Description of the Drawings

Fig. 1 is a side view showing the overall structure of an electric hydraulic excavator in accordance with an embodiment of the present invention.
Fig. 2 is a top view showing the overall structure of the electric hydraulic excavator in accordance with the embodiment of the present invention.
Fig. 3 is a hydraulic circuit diagram showing the configuration of a hydraulic drive system in the embodiment of the present invention.
Fig. 4 is a block diagram showing the configuration of an inverter device in the embodiment of the present invention together with related devices.
Fig. 5 is an electric circuit diagram showing the configuration of a step-up/down unit in the embodiment of the present invention.
Fig. 6 is a block diagram showing the configuration of a battery device in the embodiment of the present invention together with related devices.
Fig. 7 is a flow chart showing the process flow of motor driving control in the embodiment of the present invention.
Fig. 8 is a flow chart showing the process flow of battery charging control in the embodiment of the present invention.
Fig. 9 is a time chart for explaining a battery device charging operation in the embodiment of the present invention.
Fig. 10 is a time chart for explaining the battery device charging operation in a comparative example.
Fig. 11 is a time chart for explaining a battery device charging operation in a modified example of the present invention.
Fig. 12 is a flow chart showing the process flow of the battery charging control in another embodiment of the present invention.
Fig. 13 is a time chart for explaining the battery device charging operation in the embodiment of the present invention.

### Mode for Carrying out the Invention

In the following, an embodiment of the present invention will be described with reference to figures by taking an electric hydraulic excavator as an example of the target of application of the present invention.

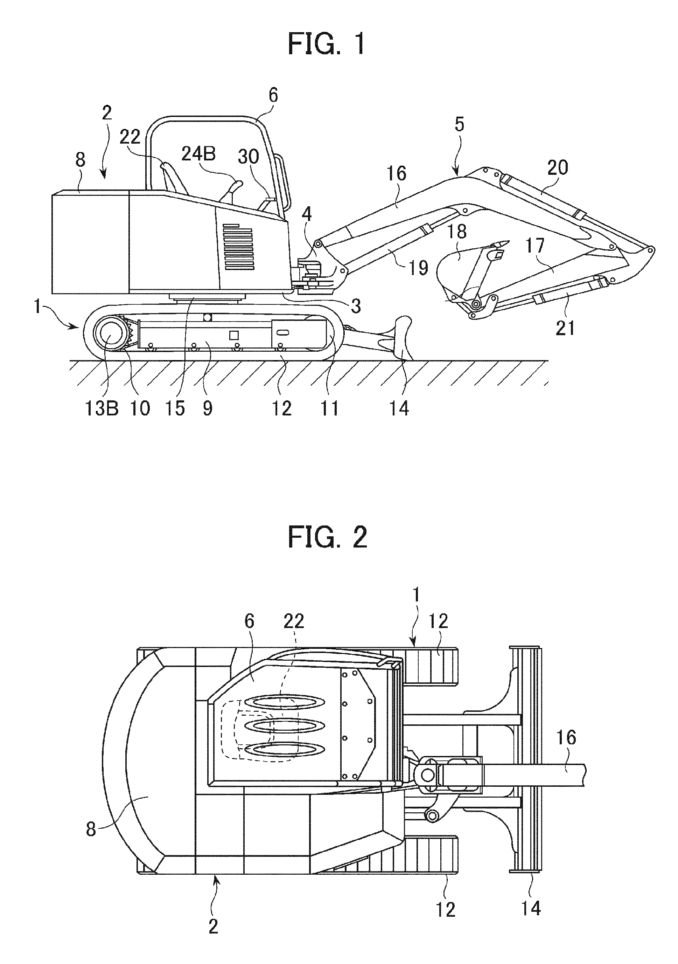

Figs. 1 and 2 are a side view and a top view showing the overall structure of an electric hydraulic excavator in accordance with an embodiment of the present invention. In the following explanation, directions "front" (right in Fig. 1), "rear" (left in Fig. 1), "right" (in front of the sheet of Fig. 1) and "left" (behind the sheet of Fig. 1) from the viewpoint of the operator seated on the cab seat of the electric hydraulic excavator in the state shown in Fig. 1 will be referred to simply as "front", "rear", "right" and "left", respectively.

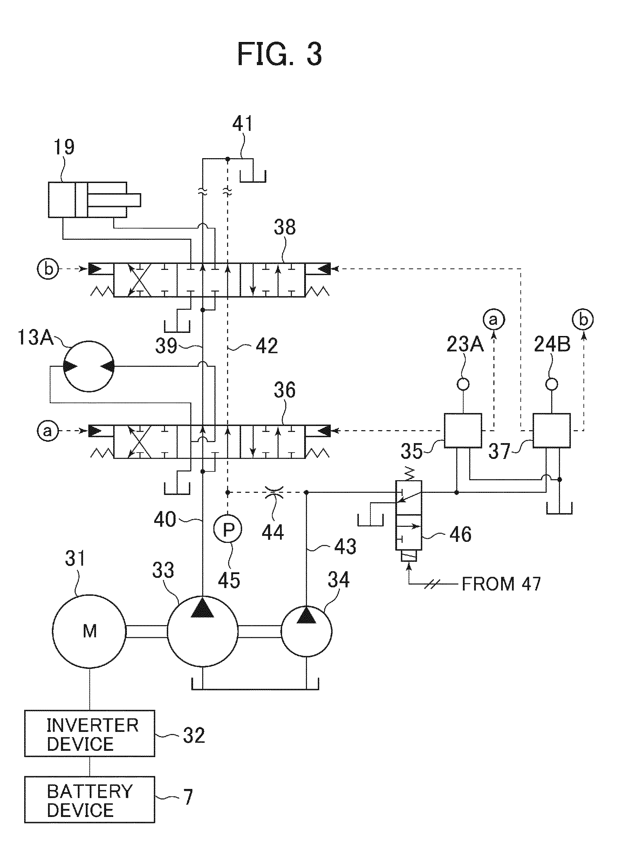

Referring to Figs. 1 and 2, the electric hydraulic excavator (in this embodiment, a mini-excavator whose operating mass is less than 6 tons) comprises a lower travel structure 1 of the crawler type, an upper rotating structure 2 mounted on the lower travel structure 1 to be rotatable, a rotation frame 3 forming the base structure of the upper rotating structure 2, a swing post 4 mounted on a front part of the rotation frame 3 to be able to rotate (swing) left and right, a multijoint work implement 5 connected to the swing post 4 to be rotatable (elevatable) in the vertical direction, a cab 6 of the canopy type formed on the rotation frame 3, and a battery device storage part 8 formed on a rear part of the rotation frame 3 to store a battery device 7 (see Figs. 3, 4 and 6 which will be explained later).

The lower travel structure 1 includes a track frame 9 in a shape like "H" when viewed from above, left and right driving wheels 10, 10 rotatably supported in the vicinity of the rear ends of left and right side faces of the track frame 9, left and right driven wheels (idlers) 11, 11 rotatably supported in the vicinity of the front ends of the left and right side faces of the track frame 9, and left and right crawlers 12, 12 each stretched between the left/right driving wheel 10 and the left/right driven wheel 11. The left driving wheel 10 (the left crawler 12) is driven and rotated by a left travel hydraulic motor 13A (see Fig. 3 which will be explained later), while the right driving wheel 10 (the right crawler 12) is driven and rotated by a right travel hydraulic motor 13B.

A blade 14 for removing earth is attached to the front of the track frame 9 to be movable up and down. The blade 14 is moved up and down by the expansion/contraction of a blade hydraulic cylinder (unshown).

A rotation wheel 15 is provided at the center of the track frame 9 so that the rotation frame 3 can be rotated via the rotation wheel 15. The rotation frame 3 (the upper rotating structure 2) is driven and rotated by a rotation hydraulic motor (unshown).

The swing post 4 is attached to the front of the rotation frame 3 to be able to rotate (swing) left and right. The swing post 4 is rotated (swung) left and right by the expansion/contraction of a swing hydraulic cylinder (unshown), by which the work implement 5 is swung left and right.

The work implement 5 includes a boom 16 connected to the swing post 4 to be rotatable in the vertical direction, an arm 17 connected to the boom 16 to be rotatable in the vertical direction, and a bucket 18 connected to the arm 17 to be rotatable in the vertical direction. The rotations of the boom 16, the arm 17 and the bucket 18 in the vertical direction are implemented by a boom hydraulic cylinder 19, an arm hydraulic cylinder 20 and a bucket hydraulic cylinder 21, respectively. Incidentally, the bucket 18 is replaceable with an attachment (unshown) having a built-in option hydraulic actuator, for example.

The cab 6 is provided with a cab seat (seat) 22, on which the operator is seated. Left and right travel control levers 23A and 23B (only the travel control lever 23A is shown in Fig. 3 which will be explained later) operable forward and backward with hands or feet to command the operation of the left and right rotation hydraulic motors 13A and 13B (i.e., the left and right crawlers 12) are arranged in front of the cab seat 22. On the floor to the left of the left travel control lever 23A, an option control pedal (unshown) to be operated left and right for commanding the operation of the option hydraulic cylinder (i.e., the attachment) is arranged. On the floor to the right of the right travel control lever 23B, a swing control pedal (unshown) to be operated left and right for commanding the operation of the swing hydraulic cylinder (i.e., the swing post 4) is arranged.

Arranged to the left of the cab seat 22 is an arm/rotation control lever 24A (unshown) of the cross-hair four-way operation, which is operable forward and backward to command the operation of the arm hydraulic cylinder 20 (i.e., the arm 17) and operable left and right to command the operation of the rotation hydraulic motor (i.e., the upper rotating structure 2). Arranged to the right of the cab seat 22 is a boom/bucket control lever 24B of the cross-hair four-way operation, which is operable forward and backward to command the operation of the boom hydraulic cylinder 19 (i.e., the boom 16) and operable left and right to command the operation of the bucket hydraulic cylinder 21 (i.e., the bucket 18). A blade control lever (unshown) operable forward and backward to command the operation of the blade hydraulic cylinder (i.e., the blade 14) is also arranged to the right of the cab seat 22.

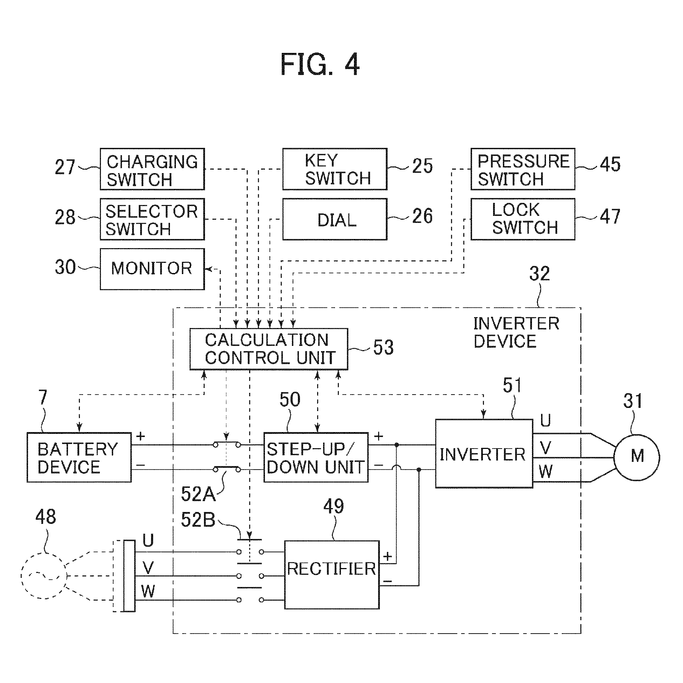

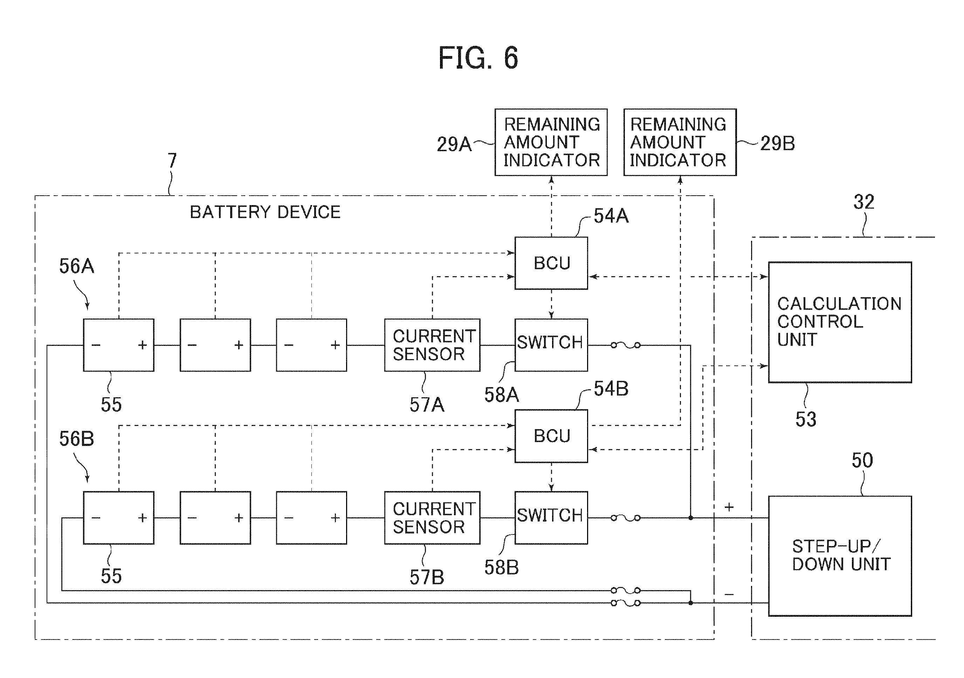

Further, a gate lock lever which is operable between an unlocking position (specifically, a lower position for prohibiting the operator from getting on/off the cab 6) and a locking position (specifically, an upper position for allowing the operator to get on/off the cab 6) is arranged to the left of the cab seat 22 (i.e., at the entrance of the cab 6). A key switch 25, a dial 26, a charging switch 27, a selector switch 28, and remaining amount indicators (electric amount indicators) 29A and 29B (see Figs. 4 and 6 which will be explained later) are arranged to the right of the cab seat 22. A monitor 30 is arranged to the front right of the cab seat 22.

Fig. 3 is a hydraulic circuit diagram showing the configuration of a hydraulic drive system of the electric hydraulic excavator which has been explained above. Fig. 3 illustrates a configuration related to the left travel hydraulic motor 13A and the boom hydraulic cylinder 19 as a representative example.

Referring to Fig. 3, the hydraulic drive system includes an electric motor 31, the battery device 7 as the electric power source for the electric motor 31, an inverter device 32 which drives and controls the electric motor 31 by controlling the electric power supplied to the electric motor 31, a hydraulic pump 33 and a pilot pump 34 which are driven by the electric motor 31, an operating device 35 of the hydraulic pilot type which is equipped with the aforementioned left travel control lever 23A, and a left travel directional control valve 36 which controls the flow of the hydraulic fluid from the hydraulic pump 33 to the left travel hydraulic motor 13A according to the operator's forward/backward operation on the left travel control lever 23A. The hydraulic drive system further includes an operating device 37 of the hydraulic pilot type which is equipped with the aforementioned boom/bucket control lever 24B and a boom directional control valve 38 which controls the flow of the hydraulic fluid from the hydraulic pump 33 to the boom hydraulic cylinder 19 according to the operator's forward/backward operation on the boom/bucket control lever 24B. Although not shown in Fig. 3, configurations related to the right travel hydraulic motor 13B, the arm hydraulic cylinder 20, the bucket hydraulic cylinder 21, the rotation hydraulic motor, the swing hydraulic cylinder and the blade hydraulic cylinder are substantially equivalent to the configuration shown in Fig. 3.

The left travel directional control valve 36, the boom directional control valve 38, etc. (specifically, including a right travel directional control valve, an arm directional control valve, a bucket directional control valve, a rotation directional control valve, a swing directional control valve and a blade directional control valve which are not illustrated) are of the center bypass type. Each of the directional control valves has a center bypass channel which is situated in a center bypass line 39. The center bypass channels of the directional control valves are connected in series in the center bypass line 39. The center bypass line 39 is communicated when the spool of each directional control valve is at its neutral position, and interrupted when the spool of a directional control valve is shifted to a switched position on the left-hand side or right-hand side in Fig. 3. The upstream end of the center bypass line 39 is connected to a delivery line 40 of the hydraulic pump 33, while the downstream end of the center bypass line 39 is connected to a tank line 41.

Each of the left travel directional control valve 36, the boom directional control valve 38, etc. has a signal channel which is situated in a hydraulic signal line 42. Specifically, the signal channels of the directional control valves are connected in series in the hydraulic signal line 42. The hydraulic signal line 42 is communicated when the spool of each directional control valve is at its neutral position, and interrupted when the spool of a directional control valve is shifted to a switched position on the left-hand side or right-hand side in Fig. 3. The upstream end of the hydraulic signal line 42 is connected to a delivery line 43 of the pilot pump 34 to branch off from the delivery line 43, while the downstream end of the hydraulic signal line 42 is connected to the tank line 41. A fixed restrictor 44 is arranged in a part of the hydraulic signal line 42 upstream of the most upstream directional control valve 36, and a pressure switch 45 (operation detecting means) is arranged between the fixed restrictor 44 and the directional control valve 36. The hydraulic pressure upstream of the directional control valve 36 is introduced by the pressure switch 45. The pressure switch 45 is closed when the introduced hydraulic pressure reaches a preset threshold value. Thus, the pressure switch 45 detects whether any one of the directional control valves has been switched or not, that is, whether any one of the hydraulic actuators (specifically, the left travel hydraulic motor 13A, the right travel hydraulic motor 13B, the boom hydraulic cylinder 19, the arm hydraulic cylinder 20, the bucket hydraulic cylinder 21, the rotation hydraulic motor, the swing hydraulic cylinder and the blade hydraulic cylinder) is being operated or not and outputs an ON signal when any one of the hydraulic actuators is being operated.

The left travel directional control valve 36 is switched by pilot pressure supplied from the operating device 35. The operating device 35 includes the aforementioned left travel control lever 23A and a pair of pressure reducing valves (unshown) for generating the pilot pressure according to the operator's forward/backward operation on the control lever 23A by use of the delivery pressure of the pilot pump 34 as the source pressure.

When the control lever 23A is operated forward from its neutral position, for example, the pilot pressure generated by one of the pilot valves according to the operation amount of the control lever 23A is outputted to a pressure receiving part (right-hand side in Fig. 3) of the left travel directional control valve 36, by which the left travel directional control valve 36 is switched to a rightward switched position in Fig. 3. Consequently, the left travel hydraulic motor 13A rotates in the forward direction, rotating the left driving wheel 10 and the left crawler 12 in the forward direction.

In contrast, when the control lever 23A is operated backward from the neutral position, the pilot pressure generated by the other one of the pilot valves according to the operation amount of the control lever 23A is outputted to a pressure receiving part (left-hand side in Fig. 3) of the left travel directional control valve 36, by which the left travel directional control valve 36 is switched to a leftward switched position in Fig. 3. Consequently, the left travel hydraulic motor 13A rotates in the backward direction, rotating the left driving wheel 10 and the left crawler 12 in the backward direction.

The boom directional control valve 38 is switched by pilot pressure supplied from the operating device 37. The operating device 37 includes the boom/bucket control lever 24B and a pair of pilot valves (unshown) for generating the pilot pressure according to the operator's forward/backward operation on the control lever 24B by use of the delivery pressure of the pilot pump 34 as the source pressure.

When the control lever 24B is operated forward from its neutral position, for example, the pilot pressure generated by one of the pilot valves according to the operation amount of the control lever 24B is outputted to a pressure receiving part (right-hand side in Fig. 3) of the boom directional control valve 38, by which the boom directional control valve 38 is switched to a rightward switched position in Fig. 3. Consequently, the boom hydraulic cylinder 19 contracts and thereby lowers the boom 16.

In contrast, when the control lever 24B is operated backward from the neutral position, the pilot pressure generated by the other one of the pilot valves according to the operation amount of the control lever 24B is outputted to a pressure receiving part (left-hand side in Fig. 3) of the boom directional control valve 38, by which the boom directional control valve 38 is switched to a leftward switched position in Fig. 3. Consequently, the boom hydraulic cylinder 19 expands and thereby raises the boom 16.

The delivery line 43 of the pilot pump 34 is equipped with a pilot relief valve (unshown) which maintains the delivery pressure of the pilot pump 34 at a constant level. The delivery line 43 of the pilot pump 34 is further equipped with a lock valve 46 which is switched according to the operation on the aforementioned gate lock lever. Specifically, a lock switch 47 (see Fig. 4 which will be explained later) which is closed when the gate lock lever is at the unlocking position (lower position) and opened when the gate lock lever is at the locking position (upper position) is employed.

When the lock switch 47 shifts to the closed state, for example, a solenoid part of the lock valve 46 is energized via the lock switch 47, by which the lock valve 46 is switched to a lower switched position in Fig. 3. Consequently, the delivery line 43 of the pilot pump 34 is communicated and the delivery pressure of the pilot pump 34 is introduced into the operating devices 35, 37, etc.

In contrast, when the lock switch 47 shifts to the open state, the solenoid part of the lock valve 46 is not energized and the lock valve 46 is returned to its neutral position (upper position in Fig. 3) by the biasing force of a spring, by which the delivery line 43 of the pilot pump 34 is interrupted. Consequently, no pilot pressure is generated and the hydraulic actuators are prohibited from operating irrespective of operations on the operating devices 35, 37, etc.

Fig. 4 is a block diagram showing the configuration of the inverter device 32 in this embodiment together with related devices.

Referring to Fig. 4, the inverter device 32 is configured to be able to selectively perform motor driving control (driving the electric motor 31 by supplying electric power from the battery device 7 to the electric motor 31) and battery charging control (charging the battery device 7 by supplying electric power from an external commercial power supply 48 to the battery device 7 when a cable from the commercial power supply 48 is connected).

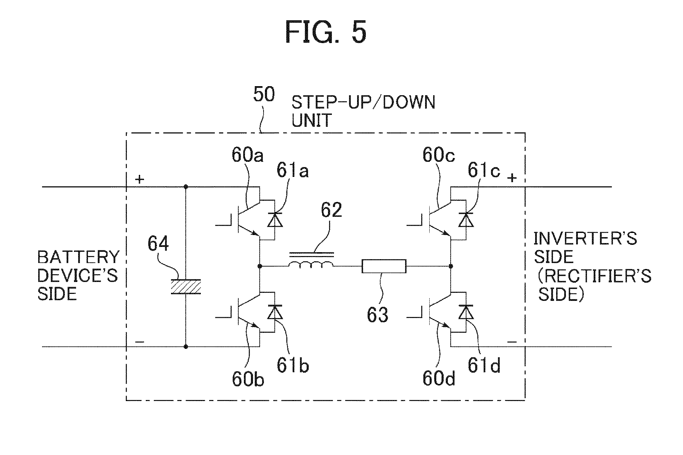

The inverter device 32 includes a rectifier 49, a step-up/down unit 50, an inverter 51, control selection switches 52A and 52B, and a calculation control unit 53. The rectifier 49 converts AC voltage (200 V) supplied from the commercial power supply 48 into DC voltage when the battery charging control is performed. The step-up/down unit 50 has a step-down function of lowering the DC voltage supplied from the rectifier 49 and supplying the lowered DC voltage to the battery device 7 when the battery charging control is performed, and a step-up function of boosting the DC voltage (approximately 200 V) supplied from the battery device 7 up to approximately 300 V when the motor driving control is performed. The inverter 51 generates AC voltage based on the DC voltage supplied from the step-up/down unit 50 and supplies the generated AC voltage to the electric motor 31 when the motor driving control is performed. The control selection switch 52A (relay of the normally open type) is arranged between the battery device 7 and the step-up/down unit 50. The control selection switch 52B (relay of the normally open type) is arranged upstream of the rectifier 49 (i.e., between the commercial power supply 48 and the rectifier 49). The step-up/down unit 50 is a step-up/down chopper which is publicly known as a unit of this type. The step-up/down unit 50 is made up of switching elements 60a - 60d, diodes 61a - 61d, reactance 62, a current sensor 63 and an electrolytic capacitor 64 as shown in Fig. 5, for example.

The calculation control unit 53 of the inverter device 32 is configured to receive signals inputted from the aforementioned key switch 25, dial 26, charging switch 27, selector switch 28, pressure switch 45, lock switch 47, etc. and to be capable of communicating with battery controllers 54A and 54B (explained later) of the battery device 7. Further, the calculation control unit 53 controls the step-up/down unit 50, the inverter 51 and the control selection switches 52A and 52B while also outputting a display signal to the monitor 30.

The key switch 25 is made up of a key cylinder and a key which can be inserted into the key cylinder. The key switch 25 outputs a signal corresponding to the rotational position (OFF position, ON position, or START position) of the key. The dial 26 is used for specifying the target revolution speed of the electric motor 31. The dial 26 outputs a target revolution speed signal corresponding to its rotational position. The charging switch 27 is used for specifying the ON/OFF of the battery charging control. The charging switch 27 outputs a signal corresponding to its operational position (OFF position or ON position).

The calculation control unit 53 of the inverter device 32 starts the motor driving control when the key switch 25 is judged to have been operated to the START position (based on the presence/absence of a signal from the key switch 25) and the gate lock lever is judged to be at the locking position (based on the presence/absence of a signal from the lock switch 47), for example. Specifically, the calculation control unit 53 controls the control selection switches 52A and 52B to shift them to the closed state and the open state, respectively, and outputs a step-up command to the step-up/down unit 50. According to the command, the step-up/down unit 50 boosts the DC voltage (approximately 200 V) supplied from the battery device 7 up to approximately 300 V. The calculation control unit 53 also outputs a command of the target revolution speed specified by the dial 26 to the inverter 51. According to the command, the inverter 51 controls the voltage applied to the electric motor 31 so that the actual revolution speed of the electric motor 31 equals the target revolution speed.

Further, the calculation control unit 53 of the inverter device 32 outputs a command of a preset low revolution speed (idle revolution speed) to the inverter 51 when all the hydraulic actuators are judged to be in the non-operated state (based on the presence/absence of a signal from the pressure switch 45) during the driving of the electric motor 31 and a preset time period (e.g., four seconds) has passed in that state, for example. According to the command, the inverter 51 controls the voltage applied to the electric motor 31 so that the actual revolution speed of the electric motor 31 equals the preset low revolution speed.

Furthermore, the calculation control unit 53 of the inverter device 32 outputs a stop command to the inverter 51 when the key switch 25 is judged to have been operated to the OFF position (based on the presence/absence of a signal from the key switch 25) during the driving of the electric motor 31, for example. According to the command, the inverter 51 stops the electric motor 31.

The calculation control unit 53 of the inverter device 32 performs the battery charging control when the key switch 25 is judged to be at the OFF position (based on the presence/absence of a signal from the key switch 25), the charging switch 27 is judged to have been operated to the ON position (based on the presence/absence of a signal from the charging switch 27), and a cable from the commercial power supply 48 is judged to have been connected (based on the presence/absence of a signal from a cable connection detecting circuit (unshown)), for example. Specifically, the calculation control unit 53 controls the control selection switches 52A and 52B to shift them to the closed state and outputs a step-down command to the step-up/down unit 50. According to the command, the step-up/down unit 50 lowers the DC voltage supplied from the rectifier 49 and supplies the lowered DC voltage to the battery device 7.

Further, the calculation control unit 53 of the inverter device 32 outputs a stop command to the step-up/down unit 50 when the charging switch 27 is judged to have been operated to the OFF position (based on the presence/absence of a signal from the charging switch 27) during the charging of the battery device 7, for example. According to the command, the step-up/down unit 50 stops the charging.

Fig. 6 is a block diagram showing the configuration of the battery device 7 in this embodiment together with related devices.

Referring to Fig. 6, the battery device 7 includes a first battery system 56A made up a plurality of batteries (i.e., modules) 55 connected in series and a second battery system 56B made up a plurality of batteries 55 connected in series. Each battery system 56A, 56B includes nine batteries 55 (only three are shown in Fig. 6 as representatives), for example. The battery device 7 further includes a first battery controller 54A corresponding to the first battery system 56A and a second battery controller 54B corresponding to the second battery system 56B. Although details are not illustrated, each battery 55 includes eight cells (made of lithium ions, etc., for example) and a cell controller for monitoring the cells.

Each cell controller in the first battery system 56A acquires information on each battery 55 (specifically, state quantities such as voltage and temperature) and outputs the acquired information to the first battery controller 54A. The positive terminal (right-hand side in Fig. 6) of the first battery system 56A is equipped with a first current sensor 57A and a first connection selection switch 58A (relay of the normally open type). The first current sensor 57A detects the electric current of the first battery system 56A and outputs information on the detected electric current to the first battery controller 54A.

The first battery controller 54A calculates the total voltage of the first battery system 56A based on the voltage information on the batteries 55 acquired from the cell controllers and calculates the remaining electric amount of the first battery system 56A based on the calculated total voltage and the electric current information acquired from the first current sensor 57A. Then, the first battery controller 54A sends the calculated total voltage and remaining electric amount of the first battery system 56A to the calculation control unit 53 of the inverter device 32. Further, the first battery controller 54A judges to which of multiple levels (e.g., 10 levels from level "0" meaning the fully discharged state to level "10" meaning the fully charged state) the remaining electric amount of the first battery system 56A corresponds, and outputs a display signal corresponding to the level to the remaining amount indicator 29A. The remaining amount indicator 29A displays the remaining electric amount of the first battery system 56A in 10 levels by properly switching ON/OFF each segment of a 10-segment bar, for example.

Furthermore, the first battery controller 54A judges whether an abnormality has occurred in the first battery system 56A or not based on the information on the batteries acquired from the cell controllers. When an abnormality is judged to have occurred, the first battery controller 54A outputs an error signal to the calculation control unit 53 of the inverter device 32.

Similarly, each cell controller in the second battery system 56B acquires information on each battery 55 and outputs the acquired information to the second battery controller 54B. The positive terminal (right-hand side in Fig. 6) of the second battery system 56B is equipped with a second current sensor 57B and a second connection selection switch 58B (relay of the normally open type). The second current sensor 57B detects the electric current of the second battery system 56B and outputs information on the detected electric current to the second battery controller 54B.

The second battery controller 54B calculates the total voltage of the second battery system 56B based on the voltage information on the batteries 55 acquired from the cell controllers and calculates the remaining electric amount of the second battery system 56B based on the calculated total voltage and the electric current information acquired from the second current sensor 57B. Then, the second battery controller 54B sends the calculated total voltage and remaining electric amount of the second battery system 56B to the calculation control unit 53 of the inverter device 32. Further, the second battery controller 54B judges to which of the multiple levels (e.g., 10 levels) the remaining electric amount of the second battery system 56B corresponds, and outputs a display signal corresponding to the level to the remaining amount indicator 29B. The remaining amount indicator 29B displays the remaining electric amount of the first battery system 56A in 10 levels by properly switching ON/OFF each segment of a 10-segment bar, for example.

Furthermore, the second battery controller 54B judges whether an abnormality has occurred in the second battery system 56B or not based on the information on the batteries acquired from the cell controllers. When an abnormality is judged to have occurred, the second battery controller 54B outputs an error signal to the calculation control unit 53 of the inverter device 32.

The selector switch 28 (see Fig. 4 explained above) is a switch used for selecting one battery system from the first and second battery systems 56A and 56B by manual operation. The selector switch 28 outputs a selection signal corresponding to its operational position.

When a selection signal for selecting the first battery system 56A is inputted from the selector switch 28, the calculation control unit 53 of the inverter device 32 controls the first connection selection switch 58A to shift it to the closed state via the first battery controller 54A while controlling the second connection selection switch 58B to shift it to the open state via the second battery controller 54B. Consequently, the first battery system 56A is connected to the step-up/down unit 50 of the inverter device 32.

In contrast, when a selection signal for selecting the second battery system 56B is inputted from the selector switch 28, the calculation control unit 53 of the inverter device 32 controls the first connection selection switch 58A to shift it to the open state via the first battery controller 54A while controlling the second connection selection switch 58B to shift it to the closed state via the second battery controller 54B. Consequently, the second battery system 56B is connected to the step-up/down unit 50 of the inverter device 32.

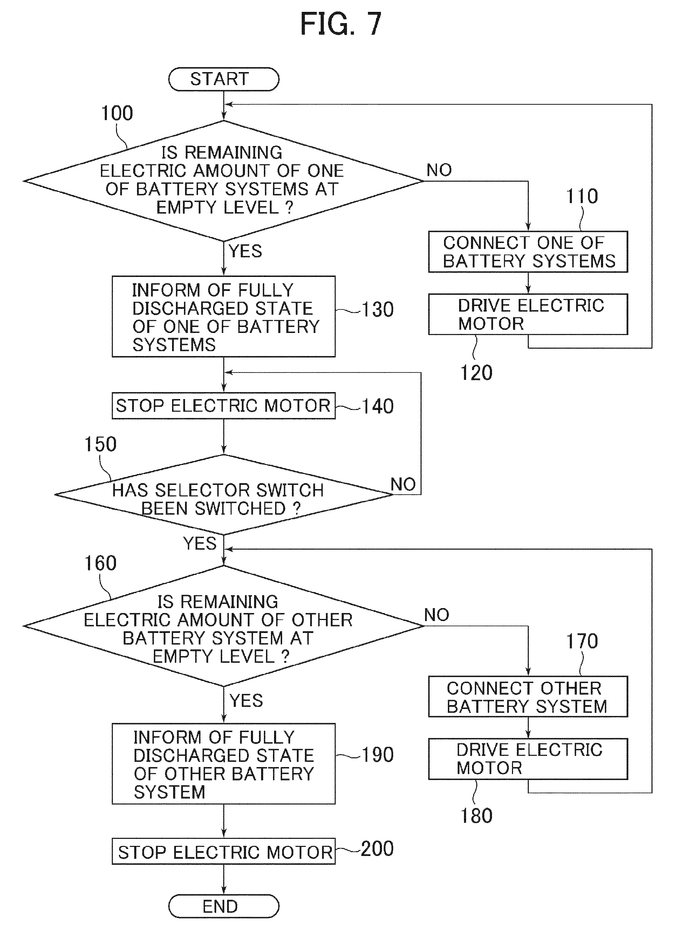

Next, a procedure for the motor driving control will be explained below referring to Fig. 7. Fig. 7 is a flow chart showing the process flow of the motor driving control in this embodiment.

The following explanation will be given of a case where the first battery system 56A has been selected with the selector switch 28, for example. In step 100, the calculation control unit 53 of the inverter device 32 judges whether or not the remaining electric amount of the first battery system 56A is at the empty level (i.e., whether the first battery system 56A has reached the fully discharged state). When the first battery system 56A has not reached the fully discharged state (step 100: NO), the process advances to step 110. In the step 110, the calculation control unit 53 sends a closing command signal to the first battery controller 54A while sending an opening command signal to the second battery controller 54B. According to the command signals, the first battery controller 54A controls the first connection selection switch 58A to shift it to the closed state and the second battery controller 54B controls the second connection selection switch 58B to shift it to the open state. Consequently, the first battery system 56A is connected to the step-up/down unit 50 of the inverter device 32.

Thereafter, the process advances to step 120, in which the calculation control unit 53 of the inverter device 32 outputs the step-up command to the step-up/down unit 50 while also outputting the target revolution speed command to the inverter 51. Consequently, the DC voltage supplied from the first battery system 56A is boosted by the step-up/down unit 50 and AC voltage generated by the inverter 51 based on the boosted DC voltage is supplied to the electric motor 31 to drive the electric motor 31. In this case, the calculation control unit 53 of the inverter device 32 commands the monitor 30 to indicate that the first battery system 56A is discharging electricity based on the signal of the detection explained above.

Until the judgment of the step 100 turns affirmative, the steps 110 and 120 are repeated, that is, the driving of the electric motor 31 (i.e., the discharging of the first battery system 56A) is continued. However, when the error signal is received from the battery controller 54A or 54B, the calculation control unit 53 outputs the stop command to the step-up/down unit 50 and the inverter 51 and thereby stops the electric motor 31. In this case, the calculation control unit 53 outputs an error display signal to the monitor 30 and a drive signal to a buzzer. Accordingly, an abnormality display lamp on the monitor 30 turns ON and the buzzer sounds.

In contrast, when the first battery system 56A has reached the fully discharged state (step 100: YES), the process advances to step 130. In the step 130, the calculation control unit 53 of the inverter device 32 outputs a full discharge display signal to the remaining amount indicator 29A via the first battery controller 54A. To display the fully discharged state in response to the display signal, the remaining amount indicator 29A blinks only the two segments at both ends of the 10-segment bar, for example. Thereafter, the process advances to step 140, in which the calculation control unit 53 of the inverter device 32 outputs the stop command to the inverter 51 and thereby stops the electric motor 31 (motor stopping means). In this case, the calculation control unit 53 outputs the drive signal to the buzzer. Accordingly, the buzzer sounds.

Thereafter, the process advances to step 150 and whether the second battery system 56B has been selected by operating the selector switch 28 or not is judged based on the selection signal from the selector switch 28. When the second battery system 56B has not been selected by operating the selector switch 28 (step 150: NO), the process returns to the step 140 and the same procedure is repeated.

When the second battery system 56B has been selected by operating the selector switch 28 (step 150: YES), the process advances to step 160. In the step 160, the calculation control unit 53 of the inverter device 32 judges whether or not the remaining electric amount of the first battery system 56A is at the empty level (i.e., whether the second battery system 56B has reached the fully discharged state). When the second battery system 56B has not reached the fully discharged state (step 160: NO), the process advances to step 170. In the step 170, the calculation control unit 53 sends the opening command signal to the first battery controller 54A while sending the closing command signal to the second battery controller 54B. According to the command signals, the first battery controller 54A controls the first connection selection switch 58A to shift it to the open state and the second battery controller 54B controls the second connection selection switch 58B to shift it to the closed state. Consequently, the second battery system 56B is connected to the step-up/down unit 50 of the inverter device 32.

Thereafter, the process advances to step 180, in which the calculation control unit 53 of the inverter device 32 outputs the step-up command to the step-up/down unit 50 while also outputting the target revolution speed command to the inverter 51. Consequently, the DC voltage supplied from the second battery system 56B is boosted by the step-up/down unit 50 and AC voltage generated by the inverter 51 based on the boosted DC voltage is supplied to the electric motor 31 to drive the electric motor 31. In this case, the calculation control unit 53 of the inverter device 32 commands the monitor 30 to indicate that the second battery system 56B is discharging electricity.

Until the judgment of the step 160 turns affirmative, the steps 170 and 180 are repeated, that is, the driving of the electric motor 31 (i.e., the discharging of the second battery system 56B) is continued. However, when the error signal is received from the battery controller 54A or 54B, the calculation control unit 53 outputs the stop command to the step-up/down unit 50 and the inverter 51 and thereby stops the electric motor 31. In this case, the calculation control unit 53 outputs the error display signal to the monitor 30 and the drive signal to the buzzer. Accordingly, the abnormality display lamp on the monitor 30 turns ON and the buzzer sounds.

In contrast, when the second battery system 56B has reached the fully discharged state (step 160: YES), the process advances to step 190. In the step 190, the calculation control unit 53 of the inverter device 32 outputs the full discharge display signal to the remaining amount indicator 29B via the second battery controller 54B. To display the fully discharged state in response to the display signal, the remaining amount indicator 29B blinks only the two segments at both ends of the 10-segment bar, for example. Thereafter, the process advances to step 200, in which the calculation control unit 53 of the inverter device 32 outputs the stop command to the inverter 51 and thereby stops the electric motor 31 (motor stopping means). In this case, the calculation control unit 53 outputs the drive signal to the buzzer. Accordingly, the buzzer sounds.

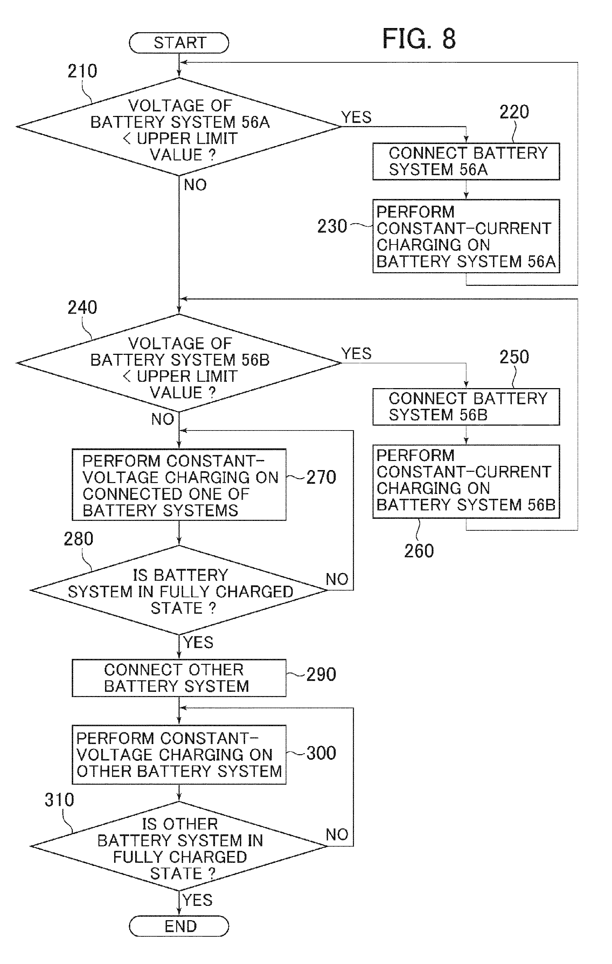

Next, a procedure for the battery charging control, as the principal part of this embodiment, will be explained below referring to Fig. 8. Fig. 8 is a flow chart showing the process flow of the battery charging control in this embodiment.

In step 210, the calculation control unit 53 of the inverter device 32 judges whether or not the total voltage of the first battery system 56A acquired from the first battery controller 54A is less than a preset upper limit value V₁ (in this embodiment, 4.15 V (upper limit voltage of each cell) × 8 (the number of cells of each battery) × 9 (the number of batteries of the first battery system 56A) = 298.8 V). In other words, the calculation control unit 53 judges whether or not the remaining electric amount of the first battery system 56A is less than 80%.

When the total voltage of the first battery system 56A is less than the upper limit value V₁ (step 210: YES), the process advances to step 220. In the step 220, the calculation control unit 53 sends the closing command signal to the first battery controller 54A while sending the opening command signal to the second battery controller 54B. According to the command signals, the first battery controller 54A controls the first connection selection switch 58A to shift it to the closed state and the second battery controller 54B controls the second connection selection switch 58B to shift it to the open state. Consequently, the first battery system 56A is connected to the step-up/down unit 50 of the inverter device 32.

Thereafter, the process advances to step 230, in which the calculation control unit 53 of the inverter device 32 performs constant-current charging on the first battery system 56A. Specifically, the calculation control unit 53 of the inverter device 32, to which the detected value of the charging current is inputted from the current sensor 63 of the step-up/down unit 50, outputs a command signal to the step-up/down unit 50 so that the detected value of the charging current equals a preset value A₁ (e.g., A₁ = 0.5C = 45 A). According to the command signal, the switching elements 60a - 60d of the step-up/down unit 50 are ON/OFF controlled and the charging current reaches the preset value A₁. In this case, the calculation control unit 53 of the inverter device 32 commands the monitor 30 to indicate that the first battery system 56A is being charged.

The steps 220 and 230 are repeated until the judgment of the step 210 turns negative. In other words, the constant-current charging of the first battery system 56A is continued until the total voltage of the first battery system 56A reaches the upper limit value V₁.

When the total voltage of the first battery system 56A has reached the upper limit value V₁ in the step 210 (step 210: NO), the process advances to step 240. In the step 240, the calculation control unit 53 of the inverter device 32 judges whether or not the total voltage of the second battery system 56B acquired from the second battery controller 54B is less than the preset upper limit value V₁ (in this embodiment, 4.15 V (upper limit voltage of each cell) × 8 (the number of cells of each battery) × 9 (the number of batteries of the second battery system 56B) = 298.8 V). In other words, the calculation control unit 53 judges whether or not the remaining electric amount of the second battery system 56B is less than 80%.

When the total voltage of the second battery system 56B is less than the upper limit value V₁ (step 240: YES), the process advances to step 250. In the step 250, the calculation control unit 53 sends the opening command signal to the first battery controller 54A while sending the closing command signal to the second battery controller 54B. According to the command signals, the first battery controller 54A controls the first connection selection switch 58A to shift it to the open state and the second battery controller 54B controls the second connection selection switch 58B to shift it to the closed state. Consequently, the second battery system 56B is connected to the step-up/down unit 50 of the inverter device 32.

Thereafter, the process advances to step 260, in which the calculation control unit 53 of the inverter device 32 performs the constant-current charging on the second battery system 56B. In this case, the calculation control unit 53 of the inverter device 32 commands the monitor 30 to indicate that the second battery system 56B is being charged. The steps 220 and 230 are repeated until the judgment of the step 240 turns negative. In other words, the constant-current charging of the second battery system 56B is continued until the total voltage of the second battery system 56B reaches the upper limit value V₁.

When the total voltage of the second battery system 56B has reached the upper limit value V₁ in the step 240 (step 240: NO), the process advances to step 270. In the step 270, the calculation control unit 53 of the inverter device 32 performs constant-voltage charging on the connected one of the battery systems (i.e., the second battery system 56B in cases where the process has advanced through the steps 260, 240 and 270, or the first battery system 56B in cases where the process has advanced through the steps 230, 240 and 270). Specifically, the calculation control unit 53 of the inverter device 32, which continuously calculates charging current necessary for keeping the total voltage of the connected battery system at the upper limit value V₁, outputs a command signal to the step-up/down unit 50 so that the detected value of the charging current equals the calculated value. According to the command signal, the switching elements 60a - 60d of the step-up/down unit 50 are ON/OFF controlled and the charging current reaches the calculated value. In this case, the calculation control unit 53 of the inverter device 32 commands the monitor 30 to indicate that the one of the battery systems (connected battery system) is being charged.

Thereafter, the process advances to step 280, in which the calculation control unit 53 judges whether or not the one of the battery systems (connected battery system) has reached the fully charged state. Specifically, the judgment on whether the battery system has reached the fully charged state or not may be made by judging whether the electric current of the battery system has dropped to a preset threshold value A₂ (e.g., A₂ = 1 A). The judgment may also be made by judging whether the constant-voltage charging time has reached a preset threshold value T (e.g., T = 100 minutes). When the one of the battery systems has not reached the fully charged state (step 280: NO), the aforementioned step 270 is repeated. In other words, the constant-voltage charging of the one of the battery systems is continued until the battery system reaches the fully charged state.

When the one of the battery systems has reached the fully charged state (step 280: YES), the process advances to step 290. In the step 290, the connection is switched to the other battery system. Thereafter, the process advances to step 300, in which the calculation control unit 53 of the inverter device 32 performs the constant-voltage charging on the other battery system. In this case, the calculation control unit 53 of the inverter device 32 commands the monitor 30 to indicate that the other battery system is being charged.

Thereafter, the process advances to step 310, in which the calculation control unit 53 judges whether or not the other battery system has reached the fully charged state. When the other battery system has not reached the fully charged state (step 310: NO), the aforementioned step 300 is repeated. In other words, the constant-voltage charging of the other battery system is continued until the other battery system reaches the fully charged state. When the other battery system has reached the fully charged state (step 310: YES), the charging control is ended.

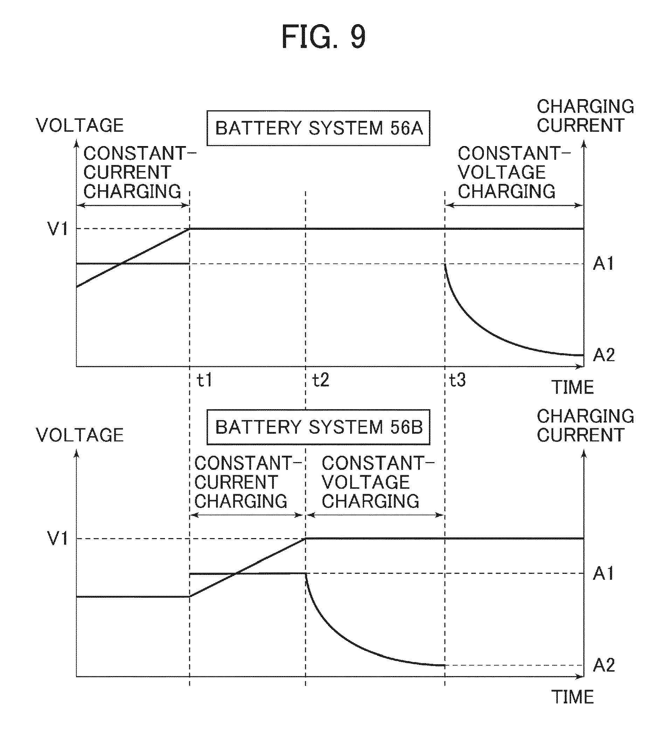

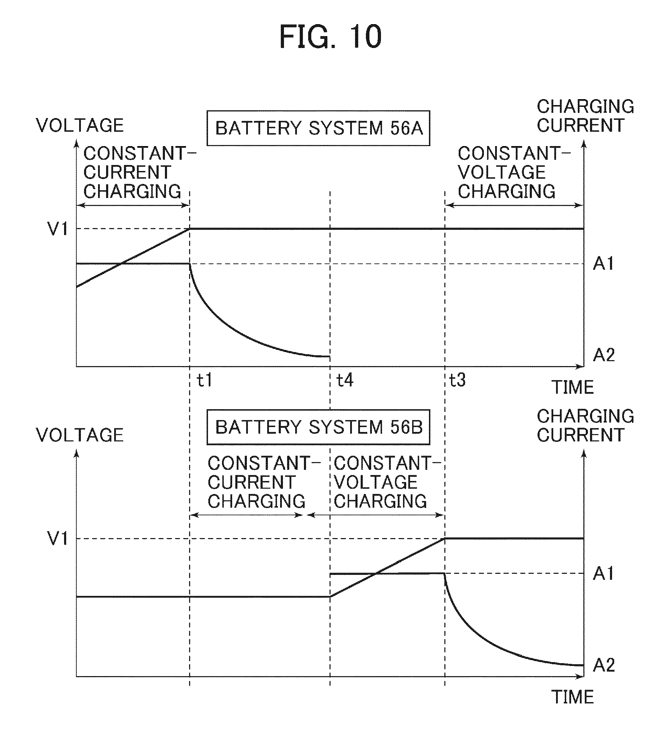

Next, the operation and effect of this embodiment will be explained below while comparing this embodiment with a comparative example. Fig. 9 is a time chart for explaining the battery device charging operation in this embodiment. Fig. 10 is a time chart for explaining the battery device charging operation in the comparative example. Both of Figs. 9 and 10 indicate temporal changes of the voltages and the charging currents of the first and second battery systems 56A and 56B.

In this embodiment, when the voltages of the first and second battery systems 56A and 56B are less than the upper limit value V₁ at the start of the charging as shown in Fig. 9, for example, the first battery system 56A is charged first by the constant-current charging by selectively connecting the first battery system 56A. When the voltage of the first battery system 56A has reached the upper limit value V₁ (time: t1), the connection is switched to the second battery system 56B and the second battery system 56B is charged by the constant-current charging. When the voltage of the second battery system 56B has reached the upper limit value V₁ (time: t2), the second battery system 56B is charged by the constant-voltage charging. When the second battery system 56B has reached the fully charged state (time: t3), the connection is switched to the first battery system 56A and the first battery system 56A is charged by the constant-voltage charging.

In contrast, in the comparative example, the first battery system 56A is charged to the fully charged state and thereafter the second battery system 56B is charged as shown in Fig. 10. Specifically, the first battery system 56A is charged first by the constant-current charging by selectively connecting the first battery system 56A. When the voltage of the first battery system 56A has reached the upper limit value V₁ (time: t1), the first battery system 56A is charged by the constant-voltage charging. When the first battery system 56A has reached the fully charged state (time: t4), the connection is switched to the second battery system 56B and the second battery system 56B is charged by the constant-current charging. When the voltage of the second battery system 56B has reached the upper limit value V₁ (time: t3), the second battery system 56B is charged by the constant-voltage charging.

In contrast to such a comparative example, this embodiment is capable of increasing the charging rate of the battery device 7 in cases where a sufficient charging time for charging both of the battery systems 56A and 56B to the fully charged state cannot be secured (i.e., when the charging time is short like the illustrated period till time t1 - t3). Specifically, in the charging period till time t1 - t3, the comparative example performs the charging according to the control procedure of (constant-voltage charging of the first battery system 56A) to (constant-current charging of the second battery system 56B), whereas this embodiment performs the charging according to the control procedure of (constant-current charging of the second battery system 56B) to (constant-voltage charging of the second battery system 56B). Further, as is clear from the figures, the charging current and the charging efficiency (i.e., the amount of charging per unit time) are lower in the constant-voltage charging compared to those in the constant-current charging. Furthermore, even during the constant-voltage charging, the charging current decreases and the charging efficiency drops as the charged battery system approaches the fully charged state. Thus, in the charging period till time t1 - t3, this embodiment is capable of increasing the charging rate of the battery device 7 compared to the comparative example.

Moreover, in this embodiment employing the control procedure (constant-current charging of the second battery system 56B) to (constant-voltage charging of the second battery system 56B), the number of times of switching the connection of the battery systems can be reduced compared to cases employing a control procedure (constant-current charging of the second battery system 56B) to (constant-voltage charging of the first battery system 56A), for example. Therefore, the operating life of the components for the switching of the connection (connection selection switches 58A and 58B) can be increased.

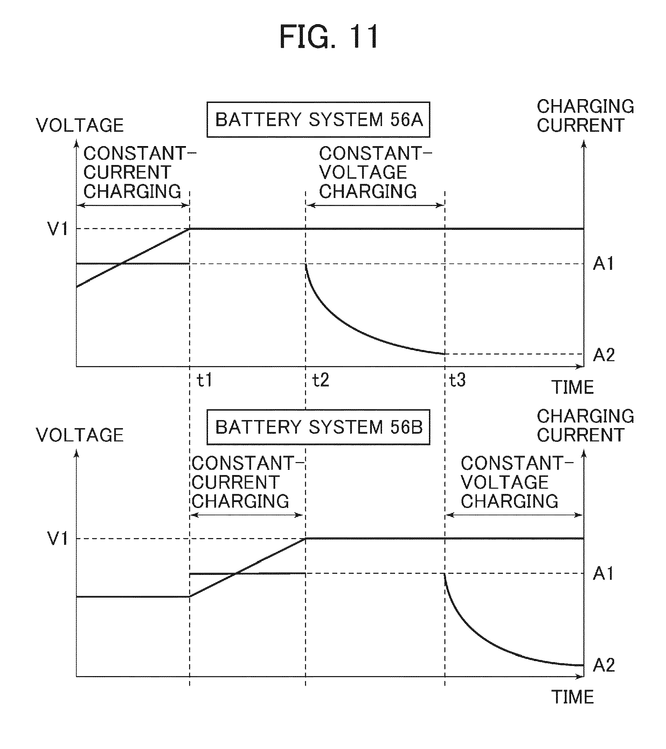

Incidentally, while the above embodiment has been explained by taking the control procedure (constant-current charging of the second battery system 56B) to (constant-voltage charging of the second battery system 56B) as an example, suitable control procedures are not restricted to this example. For example, the control procedure (constant-current charging of the second battery system 56B) to (constant-voltage charging of the first battery system 56A) shown in Fig. 11 may also be employed even though the number of times of switching the battery systems increases compared to the above first embodiment. Also in such a modified example, the charging rate of the battery device 7 can be increased in spite of a short charging time similarly to the above embodiment.

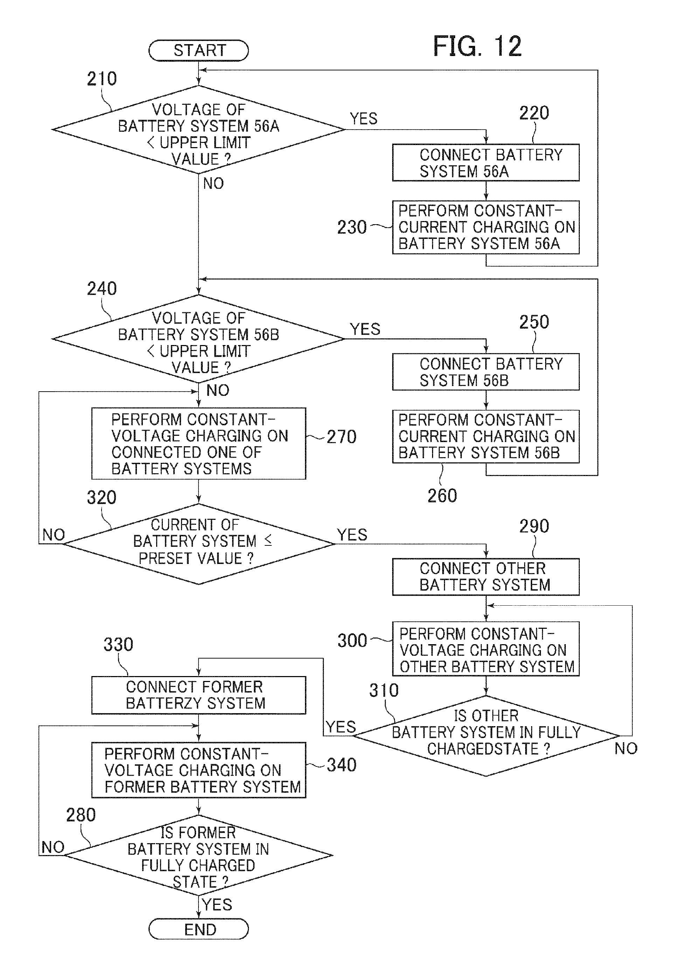

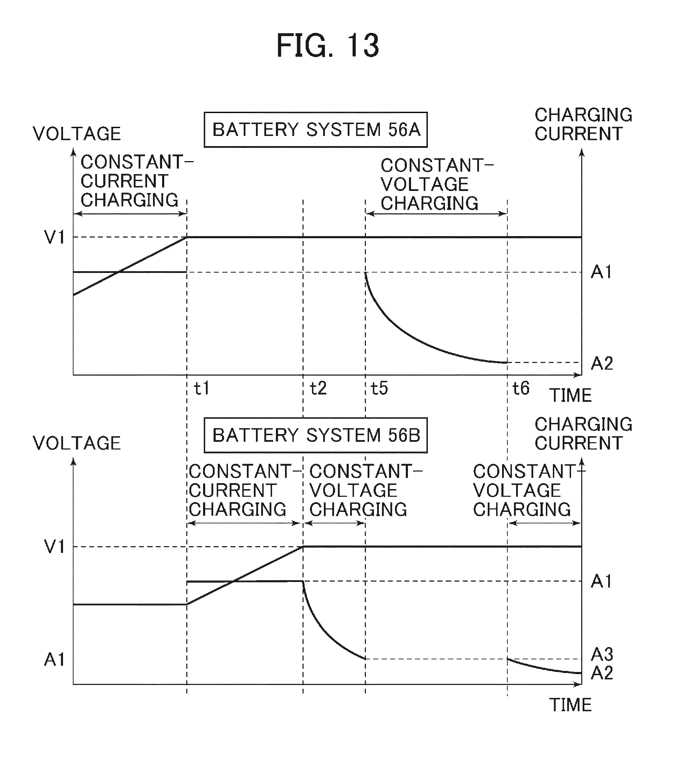

Another embodiment of the present invention will be described below referring to Figs. 12 and 13. In this embodiment, one battery system is charged by the constant-voltage charging, thereafter the connection is switched to the other battery system before the former battery system reaches the fully charged state, and then the other (latter) battery system is charged by the constant-voltage charging. In this embodiment, components/elements equivalent to those in the above embodiment are assigned the already used reference characters and repeated explanation thereof is omitted properly.

Fig. 12 is a flow chart showing the process flow of the battery charging control in this embodiment.

In this embodiment, the steps 210 - 270 are executed similarly to the above embodiment. Thereafter, the process advances to step 320. In the step 320, the calculation control unit 53 of the inverter device 32 judges whether or not the electric current of the connected one of the battery systems has dropped to a preset value A₃ (the electric current value A₁ in the constant-current charging > A₃ > the electric current value A₂ in the fully discharged state). When the electric current of the one of the battery systems (connected battery system) has not dropped to the preset value A₃ (step 320: NO), the aforementioned step 270 is repeated, that is, the constant-voltage charging of the one of the battery systems is continued.

In contrast, when the electric current of the one of the battery systems has dropped to the preset value A₃ (step 320: YES), the process advances to the step 290 and the connection is switched to the other battery system. Thereafter, the process advances to the step 300, in which the calculation control unit 53 of the inverter device 32 performs the constant-voltage charging on the other battery system.

Thereafter, the process advances to the step 310, in which the calculation control unit 53 judges whether or not the other battery system has reached the fully charged state. When the other battery system has not reached the fully charged state (step 310: NO), the aforementioned step 300 is repeated. In other words, the constant-voltage charging of the other battery system is continued until the other battery system reaches the fully charged state.

In contrast, when the other battery system has reached the fully charged state (step 310: YES), the process advances to step 330. In the step 330, the connection is switched to the former battery system. Thereafter, the process advances to step 340, in which the calculation control unit 53 of the inverter device 32 performs the constant-voltage charging on the former battery system.

Thereafter, the process advances to the step 280, in which the calculation control unit 53 judges whether or not the former battery system has reached the fully charged state. When the former battery system has not reached the fully charged state (step 280: NO), the aforementioned step 340 is repeated. In other words, the constant-voltage charging of the former battery system is continued until the battery system reaches the fully charged state. When the former battery system has reached the fully charged state (step 280: YES), the charging control is ended.

Next, the operation and effect of this embodiment will be explained below referring to Fig. 13. Fig. 13 is a time chart for explaining the battery device charging operation in this embodiment.

In this embodiment, when the voltages of the first and second battery systems 56A and 56B are less than the upper limit value V₁ at the start of the charging as shown in Fig. 13, for example, the first battery system 56A is charged first by the constant-current charging by selectively connecting the first battery system 56A. When the voltage of the first battery system 56A has reached the upper limit value V₁ (time: t1), the connection is switched to the second battery system 56B and the second battery system 56B is charged by the constant-current charging. When the voltage of the second battery system 56B has reached the upper limit value V₁ (time: t2), the second battery system 56B is charged by the constant-voltage charging.

When the electric current of the second battery system 56B has dropped to the preset value A₃ (time: t5), the connection is switched to the first battery system 56A and the first battery system 56A is charged by the constant-voltage charging. When the first battery system 56A has reached the fully charged state (time: t6), the connection is switched to the second battery system 56B and the second battery system 56B is charged by the constant-voltage charging.

Also in this embodiment, the charging rate can be increased in spite of a short charging time similarly to the above embodiment. Furthermore, the charging rate can be increased further by this embodiment when the charging time is short (like the illustrated period till time t5 - t6) even though the number of times of switching the connection of the battery systems increases compared to the above embodiment.

In the explanation of the above embodiments, etc., the inverter device 32 is configured to be able to selectively perform the motor driving control for driving the electric motor 31 by supplying the electric power from the battery device 7 to the electric motor 31 (first control mode) and the battery charging control for charging the battery device 7 by supplying the electric power from the commercial power supply 48 to the battery device 7 when a cable from the external commercial power supply 48 is connected (second control mode) depending on the operation on the key switch 25 and the charging switch 27, and to perform control procedures like (constant-current charging of the battery system 56A) to (constant-current charging of the battery system 56B) in the second control mode, for example. However, the control modes and procedures are not restricted to these examples. Specifically, the inverter device 32 may also be configured to be able to selectively perform the aforementioned first control mode, the aforementioned second control mode, a third control mode for driving the electric motor 31 by supplying the electric power from the commercial power supply 48 to the electric motor 31, and a fourth control mode for driving the electric motor 31 while charging the battery device 7 by supplying the electric power from the commercial power supply 48 to the electric motor 31 and the battery device 7, depending on the operation on the key switch 25, the charging switch 27 and a mode selection switch (unshown), and to perform control procedures like (constant-current charging of the battery system 56A) to (constant-current charging of the battery system 56B) in the fourth control mode, for example. Also in this case, effects equivalent to the aforementioned effects can be achieved.

In an example described in the above embodiments, etc., the battery system 56A is charged by the constant-current charging, the connection is switched to the battery system 56B immediately after the voltage of the battery system 56A reaches the upper limit value, and then the battery system 56B is charged by the constant-current charging. However, the procedure for the charging is not restricted to this example. For example, it is also possible to charge the battery system 56A by the constant-current charging, charge the battery system 56A by the constant-voltage charging when the voltage of the battery system 56A has reached the upper limit value, switch the connection to the battery system 56B before the battery system 56A reaches the fully charged state (i.e., when the current of the battery system 56A has dropped to the preset value A₃), and then charge the battery system 56B by the constant-current charging. In this case, the charging rate of the battery device 7 can be increased even though the achieved effects are weaker compared to the above embodiments, etc.

While the connection is switched to the other battery system by the manual operation on the selector switch 28 in the above embodiments, etc. when the electric motor 31 stops due to the drop in the remaining electric amount of the connected battery system to the empty level, the switching may also be performed differently. For example, it is also possible to switch the battery system automatically when a preset time period has passed since the stoppage of the electric motor 31 caused by the drop in the remaining electric amount of the connected battery system to the empty level.

While the battery systems 56A and 56B of the battery device 7 are configured to have the same number of batteries 55 in the above embodiments, etc., the battery systems 56A and 56B may be configured differently. As a specific example, it is possible to form the first battery system 56A with twelve batteries 55 connected in series and the second battery system 56B with six batteries 55 connected in series.

While the battery device 7 includes two battery systems 56A and 56B in the above embodiments, etc., the battery device 7 may include three or more battery systems. As a specific example, the battery device 7 may include three battery systems each having six batteries 55 connected in series.

While the electric hydraulic excavator as a target of application of the present invention is equipped with the left and right travel hydraulic motors 13A and 13B, the rotation hydraulic motor, etc. as the hydraulic actuators other than those for the work implement (the boom hydraulic cylinder 19, the arm hydraulic cylinder 20 and the bucket hydraulic cylinder 21) in the above explanation, the electric hydraulic excavator may also be configured differently. For example, the electric hydraulic excavator may be equipped with left and right travel electric motors driven by the electric power supplied from the battery device 7 instead of the left and right travel hydraulic motors 13A and 13B. The electric hydraulic excavator may also be equipped with a rotation electric motor driven by the electric power supplied from the battery device 7 instead of the rotation hydraulic motor.

The present invention is applicable also to middle-sized electric hydraulic excavators on condition that the electric power required by the electric motor(s) is reduced or the electric power supplied by the batteries is increased by technological progress or other factors. Further, it goes without saying that the present invention is applicable not only to electric hydraulic excavators but also to other types of electric construction machines.

### Description of Reference Characters

7 battery device
13A left travel hydraulic motor
13B right travel hydraulic motor
19 boom hydraulic cylinder
20 arm hydraulic cylinder
21 bucket hydraulic cylinder
28 selector switch (connection switching means)
31 electric motor
32 inverter device (connection switching means, charging control means)
33 hydraulic pump
48 commercial power supply
51 inverter
55 battery
56A first battery system
56B second battery system
58A first connection selection switch (connection switching means)
58B second connection selection switch (connection switching means)

## Claims

1. An electric construction machine comprising:
an electric motor (31);
a hydraulic pump (33) driven by the electric motor (31);
a plurality of hydraulic actuators (13A, 19) driven by hydraulic fluid delivered from the hydraulic pump (33);
a battery device (7) including a plurality of battery systems (56A, 56B) each having a plurality of batteries (55) connected in series;
connection switching means (32, 58A, 58B) for selectively connecting one of the battery systems (56A, 56B); and
an inverter (51) for converting DC power supplied from the battery system selectively connected by the connection switching means (32, 58A, 58B) into AC power and supplying the AC power to the electric motor (31), wherein:
the electric construction machine comprises charging control means (32) which supplies electric power from an external power supply (48) to the battery system selectively connected by the connection switching means (32, 58A, 58B), performs constant-current charging when the voltage of the battery system is less than a preset upper limit value, and performs constant-voltage charging when the voltage of the battery system has reached the upper limit value, and
when the voltages of one battery system and another battery system included in the plurality of battery systems (56A, 56B) are less than the upper limit value, the charging control means (32) makes the connection switching means (32, 58A, 58B) selectively connect the former battery system, starts the constant-current charging of the former battery system, thereafter makes the connection switching means (32, 58A, 58B) switch the connection to the latter battery system before the former battery system reaches a fully charged state, and then starts the constant-current charging of the latter battery system.

2. The electric construction machine according to claim 1, wherein when the voltages of one battery system and another battery system included in the plurality of battery systems (56A, 56B) are less than the upper limit value, the charging control means (32) makes the connection switching means (32, 58A, 58B) selectively connect the former battery system, charges the former battery system by the constant-current charging, makes the connection switching means (32, 58A, 58B) switch the connection to the latter battery system immediately after the voltage of the former battery system reaches the upper limit value, and then starts the constant-current charging of the latter battery system.

3. The electric construction machine according to claim 2, wherein when the voltages of one battery system and another battery system included in the plurality of battery systems (56A, 56B) are less than the upper limit value, the charging control means (32) makes the connection switching means (32, 58A, 58B) selectively connect the former battery system, charges the former battery system by the constant-current charging, makes the connection switching means (32, 58A, 58B) switch the connection to the latter battery system immediately after the voltage of the former battery system reaches the upper limit value, charges the latter battery system by the constant-current charging, and charges the latter battery system by the constant-voltage charging when the voltage of the latter battery system has reached the upper limit value.

4. The electric construction machine according to claim 2 or 3, wherein the charging control means (32) makes the connection switching means (32, 58A, 58B) selectively connect one of the former and latter battery systems, charges the connected battery system by the constant-voltage charging, thereafter makes the connection switching means (32, 58A, 58B) switch the connection to the other one of the former and latter battery systems before the connected battery system reaches the fully charged state, and charges the other one of the former and latter battery systems by the constant-voltage charging.
